# EUROPÄISCHE PATENTSCHRIFT

(11) **EP 3 073 169 B1**
(45) Veröffentlichungstag und Bekanntmachung des Hinweises auf die Patenterteilung: **20.09.2017**
(21) Anmeldenummer: 15189120.7
(22) Anmeldetag: 09.10.2015
(51) Int. Cl.: F16L 55/033, F16L 59/21, F16L 3/06

(54) **OFFENES ANBAUTEIL MIT FEDERSPANNUNG**
OPEN ACCESSORY WITH SPRING TENSION
PIECE RAPPORTEE OUVERTE DOTEE DE TENSION DE RESSORT

(30) Priorität: 27.03.2015 DE 102015205592
(43) Veröffentlichungstag der Anmeldung: 28.09.2016
(73) Patentinhaber: Witzenmann GmbH, 75175 Pforzheim (DE)
(72) Erfinder: Mühlbauer, Elke, 76229 Karlsruhe (DE); Pluschke, Michael, 75305 Neuenbürg (DE); Retz, Marius, 71665 Vaihingen/Enz (DE)
(74) Vertreter: Lemcke, Brommer & Partner Patentanwälte Partnerschaft mbB

(56) Entgegenhaltungen:
- DE-U1- 29 901 680
- DE-U1-202007 013 516
- FR-A1- 2 513 449
- US-A- 2 870 501
- US-A- 2 922 733
- US-A1- 2013 112 518

## Beschreibung

Die Erfindung betrifft ein Anbauteil für ein Leitungselement gemäß Anspruch 1, eine Leitung gemäß Anspruch 9 sowie ein Verfahren zum Bedämpfen oder Isolieren einer Leitung nach Anspruch 11.

Zum Bedämpfen und/oder Isolieren einer Leitung oder eines Leitungselements, welches zumindest abschnittsweise gewellt oder balgartig ausgebildet sein kann, ist aus dem Stand der Technik insbesondere die Verwendung von Drahtpressringen bekannt, die regelmäßig als geschlossener Ring über die Leitung bzw. die Balgwellen gezogen werden. Hierbei ist in bestimmten Fällen als nachteilig anzusehen, dass dies aus fertigungstechnischen Gründen nicht möglich ist - beispielsweise, wenn die Bauteile im Ofen gelötet werden oder wenn gegebenenfalls vorhandene Anschlussteile eine nachträgliche Montage der Drahtpressringe nicht zulassen.

Des Weiteren hat sich als nachteilig erwiesen, dass bei den bislang verwendeten Drahtpressringen die zum Fixieren auf der Leitung erforderlichen Radialkräfte je nach Toleranz der Leitungselemente bzw. der Drahtpressringe stark streuen können. Dies kann zur Folge haben, dass die gewünschte Funktion (Bedämpfung oder Isolierung) nicht gewährleistbar ist oder dass die Drahtpressringe sogar von der Leitung bzw. den Balgwellen herunterrutschen. Auch der umgekehrte Fall ist bekannt: Die Drahtpressringe können toleranzbedingt so fest haften, dass sie nur schwer zu montieren sind.

Die DE 299 01 680 U1 offenbart ein einstückiges Halterelement zur Montage von Rohrleitungen, bestehend aus einem federelastischen Stahlband mit einem ersten und einem zweiten annähernd halbkreisförmigen federnden Schenkel und mit einem U-förmigen Befestigungsfuß.

Die DE 20 2007 013 516 U1 zeigt eine Dämpfungsanordnung für eine Abgasanlage mit einem metallischen Balg zum Verbinden von Leitungsteilen der Abgasanlage.

In der FR 2 513 449 A1 ist eine Schelle mit einer seitlichen Öffnung offenbart, welche zwischen zwei Haltebügeln angeordnet und mit einem Schutzband versehen ist.

In der US 2,870,501 ist eine Umhüllung für eine Schlauchklemme gezeigt.

Die US 2013/0112518 A1 offenbart ein Dämpfer zur Reduzierung von Rohrschwingungen.

Die US 2,922,733 zeigt eine gedämpfte Klemme für Fluidleitungen, wobei die Dämpfung der Klemme aus Silikongummi verstärkt mit Glasfasern besteht.

Der Erfindung liegt die Aufgabe zugrunde, ein Anbauteil für ein Leitungselement, ein mit einem solchen Anbauteil ausgerüstetes Leitungselement sowie ein Verfahren zum Bedämpfen oder Isolieren einer Leitung anzugeben, wobei die vorstehend aufgezählten Nachteile zu vermeiden sind. Dabei soll sich die Montage des Anbauteils deutlich einfacher und kostengünstiger gestalten, und die Funktion des Anbauteils soll dauerhaft und unabhängig von etwaigen Toleranzen sichergestellt sein.
Diese Aufgabe wird erfindungsgemäß gelöst durch ein Anbauteil mit den Merkmalen des Anspruchs 1, durch eine Leitung mit den Merkmalen des Anspruchs 9 sowie durch ein Verfahren mit den Merkmalen des Anspruchs 11.

Vorteilhafte Weiterbildungen des erfindungsgemäßen Anbauteils bzw. der erfindungsgemäßen Leitung sind Gegenstand von Unteransprüchen.

Ein erfindungsgemäßes Anbauteil für ein Leitungselement weist auf: einen im Wesentlichen ringförmigen Grundkörper, der in wenigstens einem Bereich seines Umfangs eine Unterbrechung aufweist; und wenigstens ein im Wesentlichen ringförmiges Federelement, das in wenigstens einem Bereich seines Umfangs eine Unterbrechung aufweist, welches Federelement derart angeordnet oder anordenbar ist, dass es einer Aufweitung des Grundkörpers im Bereich der Unterbrechung entgegenwirkt.

Das erfindungsgemäße Anbauteil zeichnet sich dadurch aus, dass das Federelement in den Grundkörper eingearbeitet bzw. eingebettet ist. Auf diese Weise ist das Federelement insbesondere vor äußerer Schadeinwirkung geschützt.

Eine erfindungsgemäße Leitung, die insbesondere wenigstens einen gewellten Abschnitt aufweisen kann, zeichnet sich dadurch aus, dass wenigstens ein erfindungsgemäßes Anbauteil außen an der Leitung anliegt, vorzugsweise in dem gewellten Abschnitt.

Bei einem ersten erfindungsgemäßen Verfahren zum Bedämpfen oder Isolieren einer Leitung, insbesondere einer Leitung mit wenigstens einem gewellten Abschnitt, ist die Verwendung wenigstens eines erfindungsgemäßen Anbauteils vorgesehen, welches Anbauteil entgegen einer Federkraft des Federelements im Bereich der Unterbrechungen des Grundkörpers und des Federelements aufgeweitet und von außen an der Leitung in Anlage gebracht wird, vorzugsweise in dem gewellten Abschnitt, indem die Leitung durch die aufgeweiteten Unterbrechungen des Grundkörpers und des Federelements hindurchgeführt wird, wonach sich das Anbauteil aufgrund der Federkraft nach Beendigen der Aufweitung definiert an die Leitung anlegt.

Wenn vorstehend davon die Rede war, dass die Leitung durch eine aufgeweitete Unterbrechung hindurchgeführt wird, schließt dies selbstverständlich auch mit ein, dass umgekehrt das Anbauteil unter Ausnutzung der aufgeweiteten Unterbrechung auf die Leitung aufgeschoben wird.

Der Begriff "Unterbrechung" soll vorliegend nicht implizieren, dass der Grundkörper oder das Federelement an der betreffenden Stelle permanent eine Lücke oder einen Durchbruch aufweisen muss. Es reicht aus, wenn das betreffende Element einen Schlitz oder dgl. aufweist, der zu Montagezwecken aufweitbar ist und im montierten Zustand geometrisch geschlossen sind kann.

Erfindungsgemäß kommt also anstelle der bislang regelmäßig geschlossen ausgebildeten Drahtpressringe ein offenes Anbauteil zum Einsatz, wodurch sich die Montage deutlich einfacher und kostengünstiger gestalten lässt. Im Rahmen der Erfindung kann auch das erfindungsgemäße Anbauteil bzw. dessen Grundkörper als Drahtpressring oder dergleichen ausgestaltet sein.

Das offene Anbauteil lässt sich zu jeder Zeit auf einer zu bedämpfenden Komponente oder Leitung montieren, insbesondere auf einem Balg. Die Montage kann hierbei unter Verwendung einer simplen Montagehilfe, wie einer Zange oder einem Keil, oder sogar ganz ohne Hilfsmittel erfolgen, indem das Anbauteil im Bereich seiner Unterbrechung (manuell) aufgeweitet und auf die Leitung geschoben wird. Durch eine definierte Federspannung der aufgebrachten oder eingebrachten Federelemente kann eine definierte Radialspannung realisiert werden. Diese hängt insbesondere ab von der geometrischen Abmessung der Federelemente, deren Dimensionierung, der Materialwahl und dergleichen, was dem Fachmann an sich bekannt ist.

Die Erfindung ist grundsätzlich nicht auf das Vorhandensein nur einer Unterbrechung des Grundkörpers beschränkt. Dieser kann auch mehrteilig (segmentartig) ausgebildet sein, was die Montage weiter vereinfacht.

Um unterschiedliche Funktionen für das Anbauteil realisieren zu können, sieht eine Weiterbildung desselben vor, dass der Grundkörper in einem schwingungsdämpfenden und/oder thermisch isolierenden Material ausgebildet ist.

Insbesondere kann der Grundkörper in einem metallischen Material, insbesondere Drahtpressmaterial, einem keramischen Material, einem textilen Material und/oder einem Fasermaterial, insbesondere Glasfasermaterial, ausgebildet sein oder ein solches enthalten, je nach Anforderung.

Eine vorteilhafte Weiterbildung des erfindungsgemäßen Anbauteils sieht vor, dass das Federelement als Federring mit etwa kreisrundem Querschnitt ausgebildet ist. Selbstverständlich können in Weiterbildung des erfindungsgemäßen Anbauteils mehrere solcher Federringe vorgesehen sein, die insbesondere gleichartig und/oder äquidistant angeordnet sein können.

Alternativ kann vorgesehen sein, dass das Federelement als Bandfeder mit flachem Querschnitt ausgebildet ist. Je nach Ausbildung des Federelements lassen sich unterschiedliche Federwirkungen bzw. Radialspannungen realisieren. Auch die Kombination mehrerer unterschiedlicher Federelemente liegt im Rahmen der vorliegenden Erfindung.

Es wurde bereits darauf hingewiesen, dass vorteilhafterweise bei entsprechender Weiterbildung des erfindungsgemäßen Anbauteils mehr als nur ein Federelement vorhanden ist, wodurch sich die Radialspannung definiert anpassen und einstellen lässt.

Bei einer wieder anderen Weiterbildung des erfindungsgemäßen Anbauteils kann vorgesehen sein, dass der Grundkörper und/oder das Federelement eine runde, speziell kreisrunde, eine ovale, eine polygonale, spezielle rechteckige, quadratische, hexagonale oder oktogonale Innenkontur aufweist. Da auch das Leitungselement unterschiedliche Formgebungen im Bereich der Außenkontur aufweisen kann, ergeben sich auf diese Weise unterschiedliche Möglichkeiten, den Grundkörper außen an dem Leitungselement in Anlage zu bringen. Insbesondere kann in diesem Zusammenhang vorgesehen sein, dass der Grundkörper im Wesentlichen vollflächig außen an dem Leitungselement anliegt. Es kann jedoch auch vorgesehen sein, dass die Anlage des Grundkörpers außen an dem Leitungselement nicht vollflächig erfolgt, sodass in bestimmten Bereichen zwischen dem Anbauteil und dem Leitungselement (Luft-)Spalte verbleiben, die insbesondere zum Zwecke thermischer Isolierung nutzbar sind.

Eine äußerst vorteilhafte Weiterbildung des erfindungsgemäßen Anbauteils sieht vor, dass freie Enden des Federelements im Bereich seiner Unterbrechung jeweils eine Ausformung zum Ansetzen eines Aufweitwerkzeugs oder einer Montagehilfe oder zum manuellen Ergreifen aufweisen, damit das Aufweiten des Federelements bzw. des Anbauteils und seines Grundkörpers in einfacher Weise erfolgen kann. Das erfindungsgemäße Anbauteil ist nicht auf eine bestimmte geometrische Ausgestaltung dieser Ausformung beschränkt. Beispielhaft seien hier einfache Abwinkelungen oder Ösen erwähnt.

Es wurde bereits darauf hingewiesen, dass die Montagehilfe insbesondere als Keil ausgebildet sein kann, ohne dass die Erfindung auf eine derartige Ausgestaltung beschränkt wäre.

Zwecks erweiterter Funktionsintegration kann zusätzlich vorgesehen sein, dass an dem Federelement wenigstens eine Aufnahme für ein Kabel oder ein anderes vorzugsweise biegeschlaffes Element vorgesehen ist. Vorzugsweise kann die endständige Ausformung des Federelements zum Aufnehmen eines Kabels oder eines anderen vorzugsweise biegeschlaffen Elements ausgebildet sein.

Bei der ersten Weiterbildung der erfindungsgemäßen Leitung kann vorgesehen sein, dass das Anbauteil mit einer Innenfläche seines Grundkörpers die Leitung im Wesentlichen vollflächig kontaktiert, worauf bereits oben hingewiesen wurde. Alternativ kann bei einer anderen Weiterbildung der erfindungsgemäßen Leitung vorgesehen sein, dass zwischen einer Innenfläche des Grundkörpers des Anbauteils und der Leitung wenigstens in einem Bereich ein Luftspalt ausgebildet ist, worauf ebenfalls weiter oben bereits hingewiesen wurde.

Unterschiedliche konkrete Ausführungen des Anbauteils bzw. dessen Grundkörpers liegen im Rahmen der vorliegenden Erfindung. Dies betrifft insbesondere die prozentuale Umschließung des Objekts (der Leitung) in Form des radialen Öffnungswinkels, sofern vorhanden. Die (absoluten) Abmessungen des Anbauteils sowie die Dichte oder sonstige Eigenschaften des Grundkörpermaterials sind variabel und an unterschiedliche Anwendungszwecke anpassbar. Dies betrifft auch die Außen- bzw. Innenkontur, worauf bereits hingewiesen wurde. Auch das zu umschließende Objekt (Leitung) kann eine beliebige Form haben, insbesondere rund, oval oder eckig.

Die Geometrie im Endbereich der Komponenten Grundkörper und/oder Federelementen kann grundsätzlich beliebig ausgeführt sein, wobei vorstehend auf bestimmte vorteilhafte Ausgestaltungen jedoch bereits hingewiesen wurde. Insbesondere kann vorgesehen sein, dass die Geometrie im Bereich der angesprochenen Enden für die vorgesehene Montageart oder zur Aufnahme weiterer Elemente angepasst ist, worauf ebenfalls weiter oben bereits hingewiesen wurde.

Die Erfindung zeichnet sich insbesondere durch die bereits erwähnte einfache Montage aus, wobei ein erfindungsgemäßes Anbauteil jederzeit nachrüstbar ist. Weitere Vorteile sind die erreichbare definierte Radialspannung zum Ausgleich bestehender Toleranzen sowie die kostengünstigere Ausgestaltung des Montageprozesses. Das erfindungsgemäße Anbauteil ist hinsichtlich Form und Geometrie hochgradig flexibel.

Weitere Eigenschaften und Vorteile der Erfindung ergeben sich aus der nachfolgenden Beschreibung von Ausführungsbeispielen anhand der Zeichnung.
- Figur 1: zeigt eine erstes illustratives, nicht erfindungsgemäßes Anbauteil in seinem montierten Zustand auf einer Rohrleitung, jeweils in einer Frontalansicht und im Längsschnitt;
- Figur 2: zeigt eine erste Ausgestaltung eines erfindungsgemäßen Anbauteils, jeweils in einer Frontalansicht und im Längsschnitt;
- Figur 3: zeigt ein zweites illustratives, nicht erfindungsgemäßes Anbauteil, jeweils in einer Frontalansicht und im Längsschnitt;
- Figur 4: zeigt eine zweite Ausgestaltung eines erfindungsgemäßen Anbauteils, jeweils in einer Frontalansicht und im Längsschnitt;
- Figur 5: zeigt ein drittes illustratives, nicht erfindungsgemäßes Anbauteil im montierten Zustand auf einer Rohrleitung im Querschnitt;
- Figur 6: zeigt ein viertes illustratives, nicht erfindungsgemäßes Anbauteil im Querschnitt;
- Figur 7: zeigt eine dritte Ausgestaltung eines erfindungsgemäßen Anbauteils im Querschnitt;
- Figur 8: zeigt eine vierte Ausgestaltung eines erfindungsgemäßen Anbauteils im Querschnitt;
- Figur 9: zeigt ein fünftes illustratives, nicht erfindungsgemäßes Anbauteil im Querschnitt;
- Figur 10: zeigt eine vierte Ausgestaltung eines erfindungsgemäßen Anbauteils im Querschnitt;
- Figur 11: zeigt ein sechstes illustratives, nicht erfindungsgemäßes Anbauteil im Querschnitt;
- Figur 12: zeigt eine fünfte Ausgestaltung eines erfindungsgemäßen Anbauteils mit zwei Kabelaufnahmen im Querschnitt;
- Figur 13: zeigt ein siebtes illustratives, nicht erfindungsgemäßes Anbauteil mit zwei Kabelaufnahmen im Querschnitt;
- Figur 14: zeigt in Teilabbildungen a) bis c) verschieden ausgeformte Unterbrechungen des Grundkörpers eines erfindungsgemäßen Anbauteils in der Draufsicht; und
- Figur 15: den Grundkörper aus Figur 14a) in seinem montierten Zustand auf einer Rohrleitung.

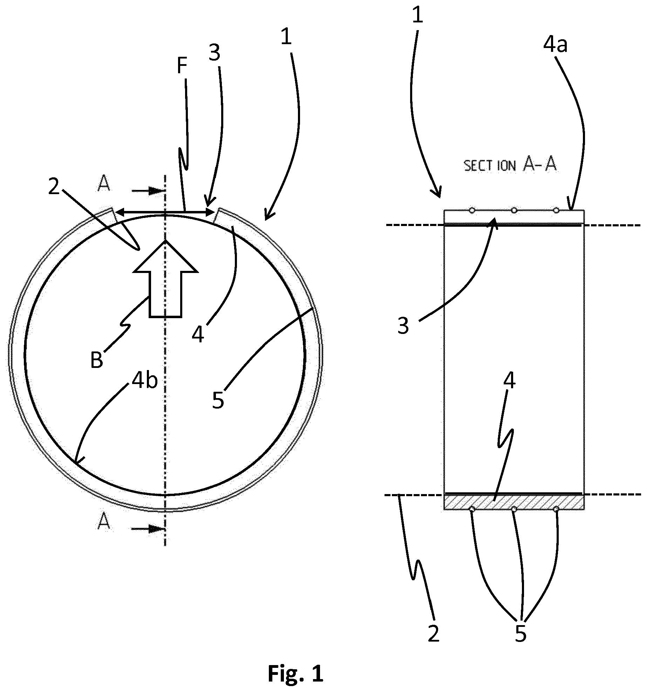

In Figur 1 ist ein illustratives, nicht erfindungsgemäßes Anbauteil 1 in seinem montierten Zustand auf einer Rohrleitung 2 gezeigt. Im linken Teil der Abbildung ist diese Anordnung in einer Frontalansicht und im rechten Teil der Anordnung im Längsschnitt gemäß der Linie A-A im linken Teil der Abbildung dargestellt. Die Rohrleitung 2 weist im dargestellten Ausführungsbeispiel einen kreisrunden Querschnitt auf und kann als gewellte Rohrleitung bzw. Schlauchleitung oder in Form eines Balgs ausgebildet sein, was in Figur 1 nicht explizit dargestellt ist. Des Weiteren kommt in Betracht, dass die Rohrleitung 2 nur abschnittsweise gewellte Bereiche aufweist.

Das Anbauteil 1 ist nach Art eines Rings ausgebildet, der bei Bezugszeichen 3 eine Unterbrechung aufweist. Das Anbauteil 1 umfasst einen mit Bezugszeichen 4 bezeichneten Grundkörper, der an seiner Außenseite 4a drei äquidistant und parallel zueinander angeordnete Federelemente in Form von Ringfedern aufweist, die in Figur 1 mit Bezugszeichen 5 bezeichnet sind. Sowohl der Grundkörper 4 als auch die Federelemente 5 weisen bei Bezugszeichen 3 die bereits angesprochene Unterbrechung auf.

Das Anbauteil 1 liegt in dem gezeigten Ausführungsbeispiel mit einer Innenseite 4b der Grundkörpers 4 vollflächig außen an der Rohrleitung 2 an, um diese gezielt in einem Bereich mechanisch zu bedämpfen und/oder thermisch zu isolieren. Der Grundkörper 4 des Anbauteils 1 ist zu diesem Zweck aus einem geeigneten Material hergestellt. Die Federelemente 5 sorgen für eine sichere, vollflächige Anlage des Grundkörpers 4 außen an der Rohrleitung 2, wie dargestellt.

Zum Anbringen des Anbauteils 1 an der Rohrleitung 2 kann gemäß der Darstellung in Figur 1 folgendermaßen verfahren werden: Zunächst wird das Anbauteil 1 im Bereich der Unterbrechung 3 gemäß dem Doppelpfeil F entgegen einer Federkraft der Federelemente 5 auseinandergedrückt, um eine Öffnungsbreite im Bereich der Unterbrechung zu vergrößern. Anschließend wird das Anbauteil 1 so in Richtung des Pfeils B über die Rohrleitung 2 geschoben, dass die Rohrleitung 2 durch die Unterbrechung 3 tritt. Wenn anschließend die zwecks Aufweitung aufgewendete Kraft F entfällt, nimmt das Anbauteil 1 seine in Figur 1 gezeigte Montagestellung (Montagezustand) ein.

Wie der Fachmann leicht erkennt, ist dieser Aspekt nicht auf eine bestimmte Geometrie der Rohrleitung 2 oder des Anbauteils 1 beschränkt, insbesondere nicht auf jeweils im Querschnitt kreisrunde Ausgestaltungen. Auch die Öffnungsbreite im Bereich der Unterbrechung 3 kann je nach Anforderung, insbesondere je nach Materialwahl für den Grundkörper 4 des Anbauteils 1 geeignet gewählt werden. Sie kann im Montagezustand sogar Null betragen. Auch ist die Zahl der Federelemente 5 nicht auf drei beschränkt. Schließlich müssen die Federelemente 5 auch nicht äquidistant und/oder parallel zueinander angeordnet sein.

Die Demontage des Anbauteils 1 und der Rohrleitung 2 kann wiederum durch Auseinanderdrücken F im Bereich der Unterbrechung 3 und anschließendes Entfernen von der Rohrleitung 2 in umgekehrter Richtung bezogen auf den Pfeil B erfolgen.

Durch die Federwirkung der Federelemente 5 ist jederzeit gewährleistet, dass das Anbauteil 1 mit seinem Grundkörper 4 sicher und definiert außen an der Rohrleitung 2 anliegt. Auf diese Weise lassen sich insbesondere Fertigungstoleranzen ausgleichen. Zudem bleibt ein sicherer Halt des Anbauteils 1 an der Rohrleitung 2 auch dann gewährleistet, wenn die Rohrleitung 2 im Betrieb Schwingungen oder dergleichen ausgesetzt ist, wie dies beispielsweise bei Anwendungen im KFZ-Bereich regelmäßig der Fall ist.

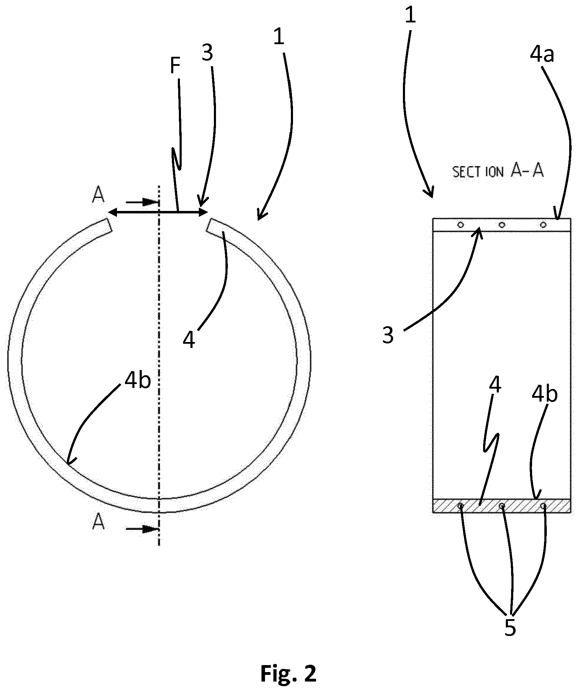

Die nachfolgenden Figuren 2 bis 15 zeigen (teilweise nicht erfindungsgemäße) Ausführungsbeispiele, wobei gleiche Bezugszeichen jeweils gleiche oder zumindest gleichwirkende Elemente bezeichnen. Nachfolgend wird nur auf bestimmte Besonderheiten der jeweiligen Ausführungsformen genauer eingegangen.

In Figur 2 ist ein erfindungsgemäßes Anbauteil 1 ohne Rohrleitung dargestellt. Anders als bei der Ausgestaltung gemäß Figur 1 sind die Federelemente 5 nicht an der Außenseite 4a des Grundkörpers 4 angeordnet, sondern sind in den Grundkörper 4 eingebettet. Ansonsten entspricht die Ausgestaltung gemäß Figur 2 derjenigen in Figur 1; auch die Verwendung ist dieselbe.

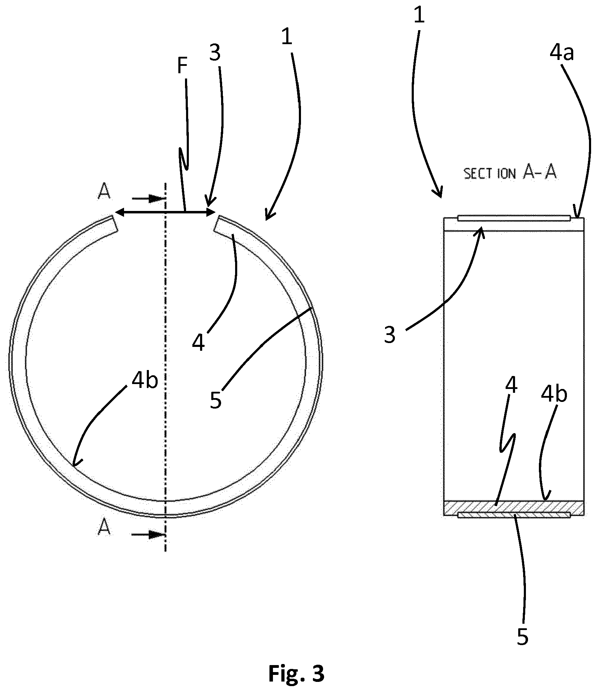

Bei der illustrativen, nicht erfindungsgemäßen Ausgestaltung in Figur 3 ist nur ein einzelnes Federelement 5 vorgesehen, welches als Bandfeder oder Blechfeder mit flachem, rechteckigem Querschnitt ausgebildet ist, wie dargestellt. Analog zur Ausgestaltung gemäß Figur 1 ist das Federelement 5 an der Außenseite 4a des Grundkörpers 4 des Anbauteils 1 angeordnet. Die Anwendung erfolgt wie weiter oben in Bezug auf Figur 1 detailliert beschrieben.

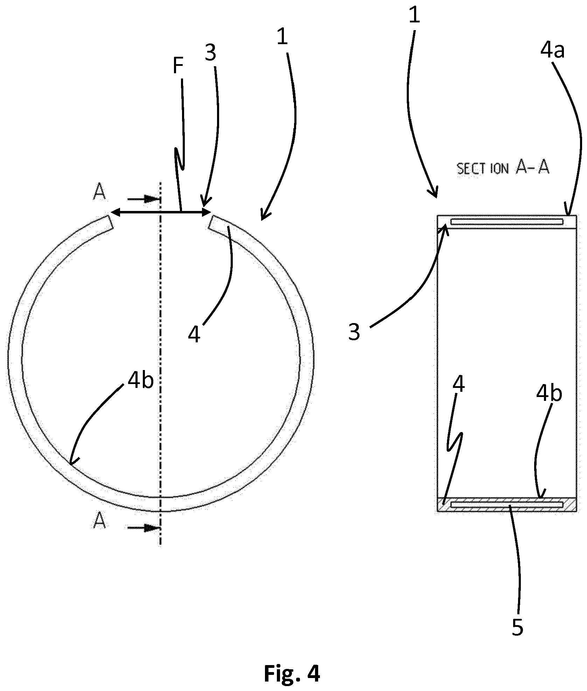

Die erfindungsgemäße Ausgestaltung gemäß Figur 4 entspricht im Wesentlichen der Ausgestaltung gemäß Figur 3, wobei wiederum das Federelement 5 in den Grundkörper 4 des Anbauteils 1 eingebettet ist (vergleiche Figur 2).

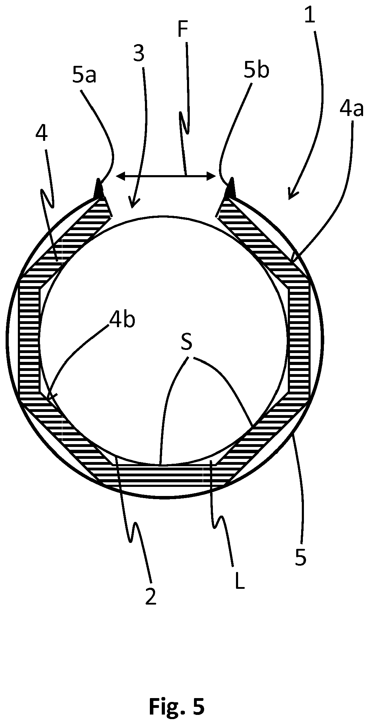

In Figur 5 ist eine illustrative, nicht erfindungsgemäße Ausführungsform gezeigt, bei der das Anbauteil 1 bzw. dessen Grundkörper 4 eine im Wesentlichen oktogonale Querschnittsform aufweist, die lediglich im Bereich der Unterbrechung 3 unvollständig ist. Auf diese Weise liegt das Anbauteil 1 mit seinem Grundkörper 4 nur punktuell an der exemplarisch dargestellten, kreisrunden Rohrleitung 2 an. Die Anlagenstellen sind in Figur 5 mit dem Bezugszeichen S teilweise bezeichnet. Zwischen den Anlagenstellen S befinden sich leere Bereiche L, die mit Luft befüllt sein können, was eine zusätzliche (Luftspalt-)Isolierung der Rohrleitung 2 bewirken kann.

Wie der Fachmann leicht erkennt, ist die Erfindung keinesfalls auf die in Figur 5 dargestellte oktogonale Ausgestaltung des Grundkörpers 4 beschränkt. Insbesondere können auch andere polygonale Ausgestaltungen des Grundkörpers Verwendung finden, beispielsweise eine hexagonale Ausgestaltung.

Wie man der Figur 5 noch entnimmt, liegt das dargestellte Federelement 5 nur punktuell im Bereich der Ecken des Oktogons außen an dem Grundkörper 4 an. Wiederum liegt es auch im Rahmen der Erfindung, das Federelement 5 in den Grundkörper 4 zu integrieren. Keinesfalls ist die Ausgestaltung gemäß Figur 5 bzw. Varianten hiervon auf die Verwendung eines einzelnen Federelements 5 beschränkt. Das Federelement 5 kann wiederum als Ringfeder oder als Bandfeder oder in anderer geeigneter Weise ausgebildet sein.

Weiterhin dargestellt sind in Figur 5 noch Ausformungen 5a, 5b an den freien Enden des Federelements 5 im Bereich der Unterbrechung 3. Diese endständigen Ausformungen 5a, 5b können zum Einwirken gemäß des Doppelpfeils F auf das Federelement 5 dienen - beispielsweise, um dort ein Aufweitwerkzeug (nicht gezeigt) oder eine andere geeignete Montagehilfe anzusetzen und auf das Federelement 5 einzuwirken. Die Ausformungen 5a, 5b sind nicht auf die in Figur 5 exemplarisch dargestellten Formgebungen beschränkt; sie können in dieser oder ähnlicher Form auch bei den Ausgestaltungen gemäß den Figuren 1 bis 4 Verwendung finden. Eine mögliche alternative Ausgestaltung der Ausformungen 5a, 5b besteht in schlaufen- oder ösenartigen Umbiegungen der jeweiligen Enden des Federelements 5.

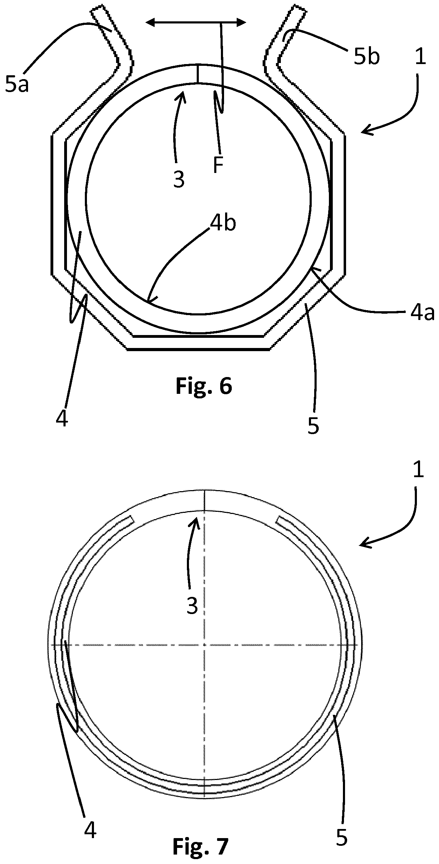

Gemäß der illustrativen, nicht erfindungsgemäßen Ausgestaltung in Figur 6 weist nicht der Grundkörper 4 sondern das Federelement 5 einen polygonalen, speziell oktogonalen, Querschnitt auf. Die Ausformungen 5a, 5b sind als einfache Abwinkelungen ausgebildet. Auffällig ist noch, dass der Grundkörper 4 bei seiner Unterbrechung 3 keine Lücke bzw. keine permanente Öffnung aufweist, sondern - im gezeigten Montagezustand - umfänglich geschlossen ist.

Das erfindungsgemäße Anbauteil 1 gemäß Figur 7 entspricht im Wesentlichen dem aus Figur 2 oder Figur 4, je nach gewählter Art des Federelements 5. Allerdings weist der Grundkörper 4 bei seiner Unterbrechung 3 keine Lücke bzw. keine permanente Öffnung auf.

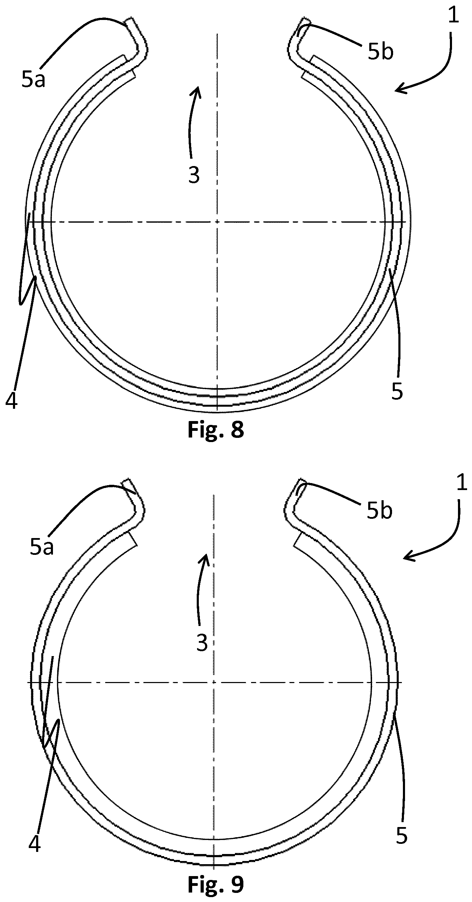

Das erfindungsgemäße Anbauteil 1 gemäß Figur 8 entspricht im Wesentlichen dem aus Figur 2 oder Figur 4, je nach gewählter Art des Federelements 5. Die zusätzlich vorhandenen Ausformungen 5a, 5b sind wiederum als einfache Abwinkelungen ausgebildet.

Das illustrative, nicht erfindungsgemäße Anbauteil 1 gemäß Figur 9 entspricht im Wesentlichen dem aus Figur 1 oder Figur 3, je nach gewählter Art des Federelements 5. Die Ausformungen zusätzlich vorhandenen 5a, 5b sind auch hier als einfache Abwinkelungen ausgebildet.

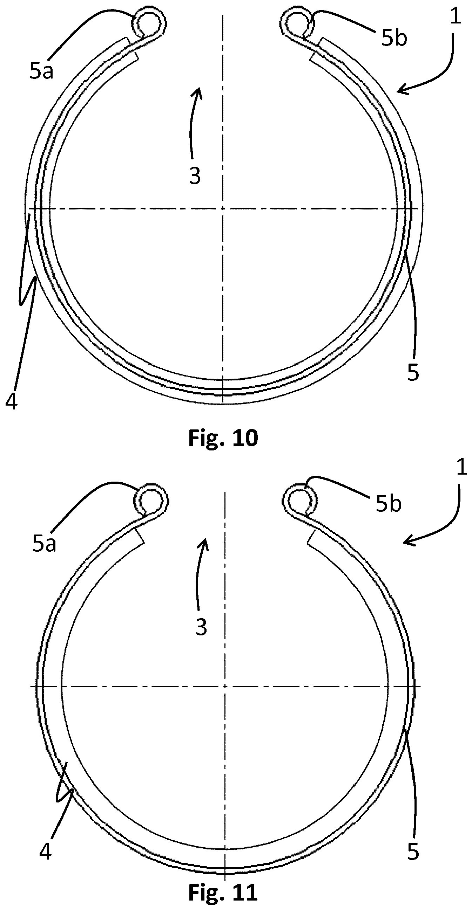

Die erfindungsgemäße Ausgestaltung in Figur 10 entspricht weitestgehend der in Figur 8. Lediglich die Ausformungen 5a, 5b sind als Ösen ausgebildet.

Die illustrative, nicht erfindungsgemäße Ausgestaltung in Figur 11 entspricht weitestgehend der in Figur 9. Lediglich die Ausformungen 5a, 5b sind auch hier als Ösen ausgebildet.

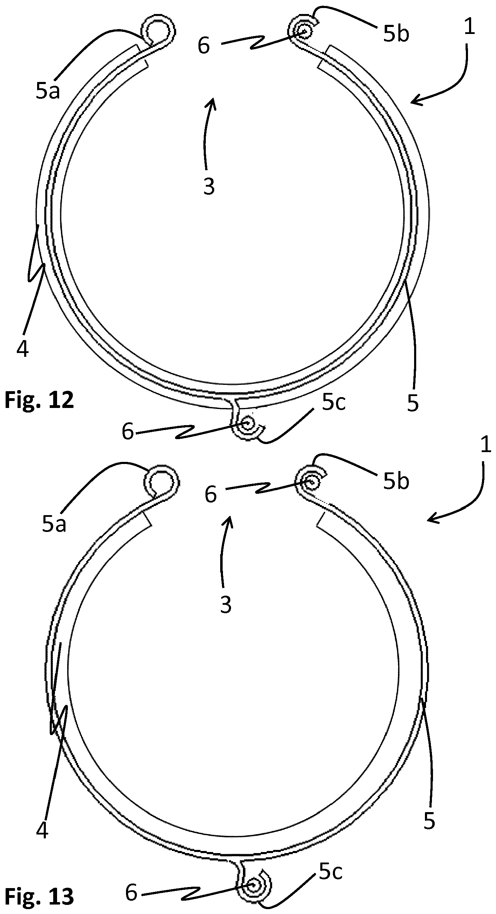

Die erfindungsgemäße Ausgestaltung in Figur 12 entspricht weitestgehend der in Figur 10. Die Ausformung 5b besitzt eine erweiterte Öffnung und dient als Aufnahme für ein Kabel 6. Außerdem besitzt das Federelement 5 etwa gegenüber der Unterbrechung 3 eine weitere hakenartige Aufnahme 5c für ein weiteres Kabel 6. Diese Aufnahme 5c ist außerhalb des Grundkörpers 4 angeordnet.

Die illustrative, nicht erfindungsgemäße Ausgestaltung in Figur 13 entspricht weitestgehend der in Figur 11. Die Ausformungen 5b und 5c sind analog zur der Ausgestaltung in Figur 12 ausgebildet.

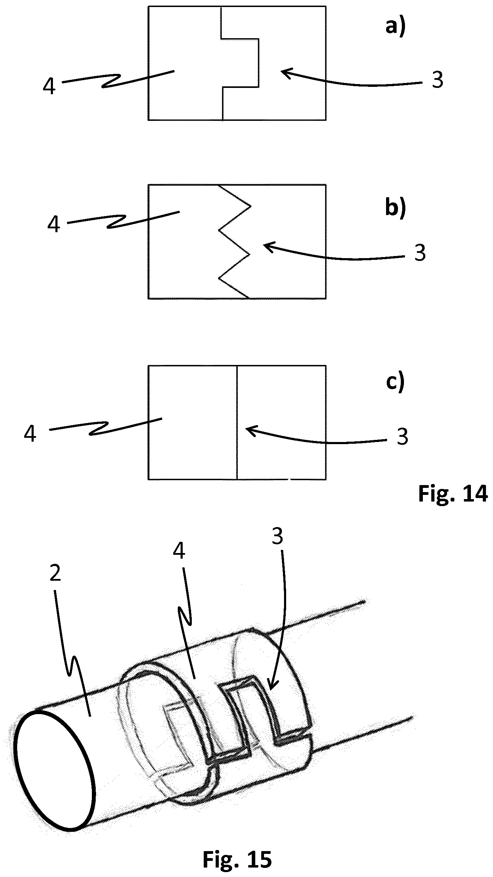

Die Teilabbildungen a) bis c) der Figur 14 zeigen in Draufsicht verschiedene geometrische Ausgestaltungen der Unterbrechung 3 des Grundkörpers 4. Die Unterbrechung kann - ohne Beschränkung - stufig (a)), dreieckförmig (b)) oder gerade (c)) ausgeführt sein.

Figur 15 zeigt einen auf einer Leitung 2 montierten Grundkörper 4 eines erfindungsgemäßen Anbauteils mit zwei Unterbrechungen 3 etwa gemäß Figur 14a). Grundsätzlich kann jedes der vorstehend beschriebenen Anbauteile bzw. dessen Grundkörper 4 entsprechend mehrteilig ausgebildet sein.

## Patentansprüche

1. Anbauteil (1) für ein Leitungselement (2), aufweisend:
einen im Wesentlichen ringförmigen Grundkörper (4), der in wenigstens einem Bereich seines Umfangs eine Unterbrechung (3) aufweist; und
wenigstens ein im Wesentlichen ringförmiges Federelement (5), das in wenigstens einem Bereich seines Umfangs eine Unterbrechung (3) aufweist, welches Federelement (5) derart angeordnet oder anordenbar ist, dass es einer Aufweitung des Grundkörpers (4) im Bereich der Unterbrechung (3) entgegenwirkt,
**dadurch gekennzeichnet, dass**
das Federelement (5) im Bereich des Grundkörpers (4) vollständig in den Grundkörper (4) eingebettet ist.

2. Anbauteil (1) nach Anspruch 1, **dadurch gekennzeichnet, dass** der Grundkörper (4) in einem schwingungsdämpfenden und/oder thermisch isolierenden Material ausgebildet ist.

3. Anbauteil (1) nach Anspruch 1 oder 2, **dadurch gekennzeichnet, dass** der Grundkörper (4) in einem metallischen Material, insbesondere Drahtpressmaterial, einem keramischen Material, einem textilen Material und/oder einem Fasermaterial, insbesondere Glasfasermaterial, ausgebildet ist.

4. Anbauteil (1) nach einem der vorhergehenden Ansprüche, **dadurch gekennzeichnet, dass**
das Federelement (5) als Federring mit etwa kreisrundem Querschnitt ausgebildet ist, oder das Federelement (5) als Bandfeder mit flachem Querschnitt ausgebildet ist.

5. Anbauteil (1) nach einem der vorhergehenden Ansprüche, **dadurch gekennzeichnet, dass**
mehr als ein Federelement (5) vorhanden ist.

6. Anbauteil (1) nach einem der vorhergehenden Ansprüche, **dadurch gekennzeichnet, dass**
der Grundkörper (4) und/oder das Federelement (5) eine runde, kreisrunde, ovale, polygonale, speziell rechteckige, quadratische, hexagonale oder oktogonale, Innenkontur und/oder Außenkontur aufweist.

7. Anbauteil (1) nach einem der vorhergehenden Ansprüche, **dadurch gekennzeichnet, dass**
freie Enden des Federelements (5) im Bereich seiner Unterbrechung (3) eine Ausformung (5a, 5b) zum Ansetzen eines Aufweitwerkzeugs oder einer Montagehilfe, insbesondere eines Keils, oder zum manuellen Ergreifen aufweisen.

8. Anbauteil (1) nach einem der vorhergehenden Ansprüche, **dadurch gekennzeichnet, dass**
an dem Federelement (5) wenigstens eine Aufnahme (5b, 5c) für ein Kabel (6) oder ein anderes vorzugsweise biegeschlaffes Element vorgesehen ist, vorzugsweise dass die Ausformung (5b) nach Anspruch 7 zum Aufnehmen eines Kabels (6) oder eines anderen vorzugsweise biegeschlaffen Elements ausgebildet ist.

9. Leitung (2), insbesondere mit wenigstens einem gewellten Abschnitt, mit wenigstens einem Anbauteil (1) nach einem der Ansprüche 1 bis 8, welches Anbauteil (1) außen an der Leitung (2) anliegt, vorzugsweise in dem gewellten Abschnitt.

10. Leitung (2) nach Anspruch 9, **dadurch gekennzeichnet, dass**
das Anbauteil (1) mit einer Innenfläche (4b) seines Grundkörpers (4) die Leitung (2) im Wesentlichen vollflächig kontaktiert oder dass zwischen einer Innenfläche (4b) des Grundkörpers (4) des Anbauteils (1) und der Leitung (2) wenigstens in einem Bereich ein Luftspalt (L) ausgebildet ist.

11. Verfahren zum Bedämpfen oder Isolieren einer Leitung (2), insbesondere einer Leitung (2) mit wenigstens einem gewellten Abschnitt, mittels wenigstens eines Anbauteils (1) nach einem der Ansprüche 1 bis 8, welches Anbauteil (1) entgegen einer Federkraft des Federelements (5) im Bereich der Unterbrechungen (3) des Grundkörpers (4) und des Federelements (5) aufgeweitet (F) und von außen an der Leitung (2) in Anlage gebracht wird, vorzugsweise in dem gewellten Abschnitt, indem die Leitung (2) durch die aufgeweiteten Unterbrechungen (3) des Grundkörpers (4) und des Federelements (5) hindurch geführt wird, wonach sich das Anbauteil (1) aufgrund der Federkraft nach Beendigen der Aufweitung definiert an die Leitung (2) anlegt.

## Claims

1. Mounting part (1) for a duct element (2), having:
a substantially ring-shaped base body (4), which has an interruption (3) in at least one region of its circumference; and
at least one substantially ring-shaped resilient element (5), which has an interruption (3) in at least one region of its circumference, which resilient element (5) is arranged or can be arranged in such a way that it counteracts expansion of the base body (4) in the region of the interruption (3),
**characterised in that**
the resilient element (5), in the region of the base body (4), is completely embedded in the base body (4).

2. Mounting part (1) according to claim 1, **characterised in that** the base body (4) is formed in a vibration-damping and/or thermally insulating material.

3. Mounting part (1) according to claim 1 or 2, **characterised in that** the base body (4) is formed in a metallic material, especially compressed wire material, a ceramic material, a textile material and/or a fibre material, especially glass fibre material.

4. Mounting part (1) according to any one of the preceding claims, **characterised in that**
the resilient element (5) is in the form of a resilient ring having an approximately circular cross-section, or the resilient element (5) is in the form of a leaf spring having a flat cross-section.

5. Mounting part (1) according to any one of the preceding claims, **characterised in that**
more than one resilient element (5) is present.

6. Mounting part (1) according to any one of the preceding claims, **characterised in that**
the base body (4) and/or the resilient element (5) has a round, circular, oval, polygonal, especially a rectangular, square, hexagonal or octagonal, internal contour and/or external contour.

7. Mounting part (1) according to any one of the preceding claims, **characterised in that**
free ends of the resilient element (5) in the region of its interruption (3) have a shaped portion (5a, 5b) for application of an expansion tool or a mounting aid, especially a wedge, or for manual gripping.

8. Mounting part (1) according to any one of the preceding claims, **characterised in that**
on the resilient element (5) there is provided at least one holder (5b, 5c) for a cable (6) or some other, preferably flexible, element, the shaped portion (5b) according to claim 7 preferably being configured for holding a cable (6) or some other, preferably flexible, element.

9. Duct (2), especially having at least one corrugated portion, having at least one mounting part (1) according to any one of claims 1 to 8, which mounting part (1) rests against the outside of the duct (2), preferably in the corrugated portion.

10. Duct (2) according to claim 9, **characterised in that** the mounting part (1), by means of an inner surface (4b) of its base body (4), makes substantially full-surface contact with the duct (2), or an air gap (L) is formed in at least one region between an inner surface (4b) of the base body (4) of the mounting part (1) and the duct (2).

11. Method of damping or insulating a duct (2), especially a duct (2) having at least one corrugated portion, by means of at least one mounting part (1) according to any one of claims 1 to 8, which mounting part (1) is expanded in opposition to a resilient force of the resilient element (5) in the region of the interruptions (3) of the base body (4) and the resilient element (5) and brought into contact with the duct (2) from the outside, preferably in the corrugated portion, the duct (2) being guided through the expanded interruptions (3) of the base body (4) and the resilient element (5), after which the mounting part (1), after termination of the expansion, comes to rest in a defined way against the duct (2) by virtue of the resilient force.

## Revendications

1. Pièce rapportée (1) destinée à un élément de conduit (2), comprenant :
un corps de base (4) substantiellement annulaire, muni d'une discontinuité (3) dans au moins une région de son pourtour ; et
au moins un élément élastique (5) substantiellement annulaire, pourvu d'une discontinuité (3) dans au moins une région de son pourtour, lequel élément élastique (5) est, ou peut être disposé de manière à contrecarrer un élargissement dudit corps de base (4) dans la région de ladite discontinuité (3),
**caractérisée par le fait que**
l'élément élastique (5) est intégralement noyé dans le corps de base (4) dans la région dudit corps de base (4).

2. Pièce rapportée (1) selon la revendication 1, **caractérisée par le fait que** le corps de base (4) est réalisé dans un matériau d'amortissement vibratoire et/ou d'isolation thermique.

3. Pièce rapportée (1) selon la revendication 1 ou 2, **caractérisée par le fait que** le corps de base (4) est réalisé dans un matériau métallique, notamment un matériau de compression en fil métallique, un matériau céramique, un matériau textile et/ou un matériau fibreux, en particulier un matériau en fibres de verre.

4. Pièce rapportée (1) selon l'une des revendications précédentes, **caractérisée par le fait que** l'élément élastique (5) est réalisé sous la forme d'une bague élastique dont la section transversale est approximativement circulaire, ou bien ledit élément élastique (5) est réalisé sous la forme d'un ressort à ruban dont la section transversale est aplatie.

5. Pièce rapportée (1) selon l'une des revendications précédentes, **caractérisée par** la présence de plus d'un élément élastique (5).

6. Pièce rapportée (1) selon l'une des revendications précédentes, **caractérisée par le fait que** le corps de base (4) et/ou l'élément élastique (5) présente(nt) un profil intérieur et/ou un profil extérieur de forme ronde, circulaire, ovale, polygonale, spécifiquement rectangulaire, carrée, hexagonale ou octogonale.

7. Pièce rapportée (1) selon l'une des revendications précédentes, **caractérisée par le fait que** des extrémités libres de l'élément élastique (5) comportent, dans la région de sa discontinuité (3), un profilage (5a, 5b) dévolu à l'engagement d'un outil d'élargissement ou d'un auxiliaire de montage, en particulier d'un coin, ou à la préhension manuelle.

8. Pièce rapportée (1) selon l'une des revendications précédentes, **caractérisée par le fait qu'**au moins un logement (5b, 5c), dédié à un câble (6) ou à un autre élément cédant préférentiellement à la flexion, est prévu sur l'élément élastique (5) ; de préférence **par le fait que** le profilage (5b), conforme à la revendication 7, est réalisé en vue de recevoir un câble (6) ou un autre élément cédant préférentiellement à la flexion.

9. Conduit (2) notamment pourvu d'au moins une zone ondulée, présentant au moins une pièce rapportée (1) conforme à l'une des revendications 1 à 8, laquelle pièce rapportée (1) est extérieurement en applique contre ledit conduit (2), de préférence dans ladite zone ondulée.

10. Conduit (2) selon la revendication 9, **caractérisé par le fait que** la pièce rapportée (1) est en contact avec le conduit (2) pour l'essentiel sur l'intégralité de la superficie, par une face intérieure (4b) de son corps de base (4) ; ou **par le fait qu'**un interstice (L) est réservé, au moins dans une région, entre ledit conduit (2) et une face intérieure (4b) dudit corps de base (4) de ladite pièce rapportée (1).

11. Procédé d'amortissement et d'isolation, à l'aide d'au moins une pièce rapportée (1) conforme à l'une des revendications 1 à 8, d'un conduit (2) et notamment d'un conduit (2) présentant au moins une zone ondulée, ladite pièce rapportée (1) étant élargie (F) dans la région des discontinuités (3) du corps de base (4) et de l'élément élastique (5), en opposition à une force élastique dudit élément élastique (5), et étant mise en applique de l'extérieur contre ledit conduit (2), de préférence dans ladite zone ondulée, ledit conduit (2) étant alors engagé à travers les discontinuités élargies (3) dudit corps de base (4) et dudit élément élastique (5), après quoi ladite pièce rapportée (1) se plaque sur ledit conduit (2) d'une manière bien définie, sous l'action de ladite force élastique, après qu'il a été mis un terme à l'élargissement.
